(19) Europäisches Patentamt / European Patent Office / Office européen des brevets

(11) **EP 3 280 753 B1**

(12) **EUROPEAN PATENT SPECIFICATION**

(45) Date of publication and mention
of the grant of the patent:
**08.01.2020 Bulletin 2020/02**

(21) Application number: **16716796.4**

(22) Date of filing: **07.04.2016**

(51) Int Cl.:
**C08G 18/48** (2006.01)    **C08G 18/76** (2006.01)
**C08G 77/46** (2006.01)    **C08G 101/00** (2006.01)
**C08L 75/08** (2006.01)    **C08L 83/12** (2006.01)
**C08G 18/18** (2006.01)

(86) International application number:
**PCT/US2016/026397**

(87) International publication number:
**WO 2016/164552 (13.10.2016 Gazette 2016/41)**

(54) **COMPOSITION AND PROCESS FOR MAKING FLAME LAMINATED POLYURETHANE FOAMS**

ZUSAMMENSETZUNG UND VERFAHREN ZUR HERSTELLUNG VON FLAMMKASCHIERTEN FLAMMWIDRIGEN POLYURETHANSCHAUMSTOFFEN

COMPOSITION ET PROCÉDÉ DE FABRICATION DE MOUSSES DE POLYURÉTHANNES DOUBLÉES À LA FLAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2015 CN 201510171297**

(43) Date of publication of application:
**14.02.2018 Bulletin 2018/07**

(73) Proprietor: **Momentive Performance Materials Inc. Waterford, NY 12188 (US)**

(72) Inventors:
• **LUO, Yilong**
  **Shanghai 200120 (CN)**
• **TAN, SengKok**
  **Singapore 140132 (SG)**
• **HE, MingLiang**
  **Shanghai 201203 (CN)**
• **HEISLER, Ladislau**
  **Marietta, Ohio 45750 (US)**
• **DAI, Bright**
  **Shanghai 21203 (CN)**
• **AUSTIN, Paul Edwin**
  **Williamstown, West Virginia 26187 (US)**

(74) Representative: **Müller-Boré & Partner Patentanwälte PartG mbB Friedenheimer Brücke 21 80639 München (DE)**

(56) References cited:
WO-A1-2009/017973    US-A- 5 807 903
US-A1- 2009 253 817    US-A1- 2010 286 295

Remarks:
The file contains technical information submitted after the application was filed and not included in this specification

**Description**

CROSS-REFERENCE TO RELATED APPLICATIONS

The present application claims priority to and the benefit of Chinese Application No. 201510171297.2 entitled "Composition and Process for Making Flame Laminated Polyurethane Foams," filed on April 10, 2015.

FIELD

The present invention provides flame lamination polyurethane foam compositions, processes for making such foams, and laminates comprising such foams. In particular, the present invention provides a composition comprising a surfactant that can provide improved processing of flame lamination polyurethanes and improved properties in the polyurethane foam.

BACKGROUND

Flame lamination flexible slabstock foams are widely laminated with many different types of textiles for various applications, especially automotive applications such as used for the auto-seating covering materials, auto-roof covering materials, etc. This is carried out by a bonding or surface melting process, such as flame lamination. Due to their particular suitability, polyester-polyurethane foams are typically used for conventional flame lamination. The ester groups in the polyol component result in a good hot-melting behavior and the foams tend to exhibit exceptionally strong bonding to textiles. Polyester polyurethane foam/textile laminates have bonding strengths of 18 to 22 N (in accordance with DIN 53 537). Moreover, Polyester polyurethane foams exhibit elongations at break of about 300% and tensile strengths of about 200 kPa and, accordingly, permit high laminating speeds. Furthermore, at certain bulk densities such polyester foams are self-extinguishing in accordance with the FMVSS 302 (SE) flame retardant test. Therefore, polyester foams are mainly used as foamed-plastic films for the lamination process. Polyester-polyurethane flame lamination foams, however, exhibit a high fogging and fugitive emission since polyester polyols contain high concentrations of low-molecular components. The high fogging and high fugitive emissions of these foams cannot meet new emissions standards becoming prevalent in the automotive industry. Also polyester-polyurethane lamination foams have a high proportion of closed cellular structures, which narrows the foaming processing window.

On the hand, polyether-polyurethane flame lamination foam is an alternative technology with wider processing latitudes and higher foam porosity (breathability). However, polyether-polyurethane foam is known to exhibit poor bonding strengths and flame retardant performance compared to polyester-polyurethane flame lamination foams. Various research and inventions of increasing the polyether-polyurethane foam lamination bonding strength and flame retardant performance have been studied and proposed.

U.S. Patent Application Publication 2002/0098338 describes adding a bifunctional aromatic polyol comprising one or more hydroxyl-containing esters having a number average molecular weight of 150 to 999 g/mol to polyether-polyurethane foam in quantities of 1 to 20% by weight to improve the foam bonding strength.

U.S. Patent Application No. 8,535,476 describes using a natural oil derived polyol to make a polyether-polyurethane flame lamination foam at density of 25.5 kg/m3 and airflow of 3.4 cfm to improve the peeling force from 9 N to 12.5 N. However, the resulting peel strengths of the laminated parts are less than those of the laminated polyester foams. A peel strength of approximately 16 N, however, is typically required for a good adhesion.

EP 025549 (corresponding to U.S. Patent No. 4,306,037) describes the addition of neopentyl glycol hydroxypivalate ester during the production of the foam. These patents describe that this results in good laminability and a good high-frequency weldability and that high values of the compression set are obtained even at bulk densities which are relatively high for ether foams.

U.S. Patent Nos. 5,891,928 and 5,900,087 describe the addition of aliphatic diols or polymeric diols to polyether foam formulations in order to improve the flame laminability. The use of aliphatic diols or polymeric diols suffer in that they consume expensive isocyanate and add to the cost of the resulting foam.

EP 035687 (corresponding to U.S. Patent No. 4,371,630) discloses the use of solutions of reaction products of diisocyanates with diprimary diols in high-molecular polyethers having mainly secondary hydroxyl groups for the production of flame-laminable foams. The foams obtained from these compositions, however, are not resistant to aging. Thus, for example, a poorer recovery after continuous stress is found. These disadvantages are even more marked at lower bulk densities and when flame retardant agents are added in order to achieve self-extinguishing properties.

SUMMARY

The present invention provides polyurethane foams that are heat bondable to a substrate such as by, for example, flame lamination. In particular, the present invention provides polyether polyurethane foams that are heat bondable. The polyurethane foams are produced from a composition comprising a silicone based surfactant comprising pendant acetoxy capped polyether containing groups. Applicants have found that polyether polyurethane foams may be produced that are heat bondable, such as by flame lamination, to a substrate with improved properties such as, for example, initial bonding strength, final bonding strength, and/or flame retardance by the use of a surfactant as provided herein in a foam forming composition.

In one aspect, the present invention provides a process for producing a flame lamination polyurethane foam slabstock comprising reacting a composition comprising:

(a) a polyether polyol containing a functionality of 2 to 6 and a number average molecular weight of about 1,000 to about 10,000 g/mole;
(b) a polyisocyanate;
(c) at least one catalyst for the production of a polyurethane foam;
(d) a flame lamination additive;
(e) a flame retardant additive;
(f) at least one blowing agent comprising water; and
(g) a silicone surfactant comprising silicone-containing polymer of the formula:

$$MD_xD'_yM$$

wherein M is $(CH_3)_3SiO_{1/2}$-; D is $-O_{1/2}Si(CH_3)_2O_{1/2}$-; D' is $-O_{1/2}Si(CH_3)R'O_{1/2}$-; x is 40 to 150; y is 5 to 40; $x/y \leqq 7$; R' is an acetoxy capped polyether; and the surfactant comprises at least two D' units having different acetoxy capped polyethers from one another, the acetoxy capped polyether groups having with 0 mole percent of the branches being $\geqq 75\%$ by weight ethylene oxide content; the surfactant having a target average molecular weight of about 18,000 to about 35,000 Daltons.

In one embodiment, the surfactant has a target average molecular weight of from about 20,000 to about 30,000 Daltons.

In one embodiment, the surfactant has a target average molecular weight of from about 22,000 to about 28,000 Dalton.

The process of any preceding embodiment, wherein x/y is from about 4 to about 7.

The process of any preceding embodiment, wherein the surfactant comprises three D' units, each D' unit having a different acetoxy capped polyethers with 0 mole percent of the branches being $\geqq 75\%$ by weight ethylene oxide content.

In another aspect, the present invention provides a process for producing a flame lamination polyurethane foam slabstock comprising reacting a composition comprising:

(a) a polyether polyol containing a functionality of 2 to 6 and a number average molecular weight of about 1,000 to about 10,000 g/mole;
(b) a polyisocyanate;
(c) at least one catalyst for the production of a polyurethane foam;
(d) a flame lamination additive;
(e) a flame retardant additive;
(f) at least one blowing agent comprising water; and
(g) a silicone surfactant comprising silicone-containing polymer of the formula:

$$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

where $R^1$, $R^2$, and $R^3$ are polyalkylene oxide polyethers of the formula

$$-B-C_nH_{2n}O\text{-}(C_2H_4O)_e\text{-}(C_3H_6O)_f\text{-}(C_4H_8O)_g\text{-}Z,$$

$R^1$ has a blend average molecular weight in the range of from about 3000 to about 6000 grams/mole and ethylene oxide is from about 20 to about 60 weight percent of the alkylene oxide content of the polyether;
$R^2$ has a blend average molecular weight in the range of from about 800 to about 2900 grams/mole and ethylene oxide is from about 20 to about 60 weight percent of the alkylene oxide content of the polyether;
$R^3$ has a blend average molecular weight in the range of from about 130 to about 800 grams/mole and ethylene oxide is from 0 to about 75 weight percent of the alkylene oxide content of the polyether;

$R^4$ is an substituted or unsubstituted alkyl, alkaryl, or aryl group of $C_1$ to $C_{12}$;

B is derived from a moiety capable of undergoing hydrosilation;

Z is selected from the group consisting of hydrogen, $C_1$-$C_8$ alkyl or aralkyl moieties, $-C(O)Z^1$, $-C(O)OZ^1$, and $-C(O)NHZ^1$, where $Z^1$ represents mono-functional $C_1$-$C_8$ alkyl or aryl moieties;

each R is independently selected from the group consisting of $R^1$, $R^2$, $R^3$, and $R^4$;

x is 40 to 150;

y is 5 to 40 and equals a+b+c+d, where b or c, but not both, may be 0, d/(a+b+c)=0 to 1, and a+b>0; $x/y \leq 7$; n $\geq 4$; and e, f, and g are defined by the molecular weight required by the poly ether.

The process of any preceding embodiment, where x/y is $\leq 6$.

The process of any preceding embodiment, wherein x/y is about 3 to about 7.

The process of any preceding embodiment, wherein x/y is about 4 to about 7.

The process of any preceding embodiment, wherein the surfactant comprises an a unit, a b unit, and a c unit.

The process of any preceding embodiment, wherein the surfactant comprises an a unit, a b unit, and a d unit.

The process of any preceding embodiment, wherein the surfactant comprises an a unit, a c unit, and a d unit.

The process of any preceding embodiment, wherein the surfactant comprises an a unit and a c unit.

The process of any preceding embodiment, wherein the a unit has a blend average molecular weight of from about 3500 to about 5000 Daltons; even from about 4000 to about 4500 Daltons.

The process of any preceding embodiment, wherein the a unit has an ethylene oxide content of from about 30 to about 55 percent, from about 35 to about 50 percent; even from about 40 to about 50.

The process of any preceding embodiment the b unit has a blend average molecular weight of from about 1000 to about 2500 Daltons; from about 1100 to about 2300 Daltons; from about 1200 to about 2000 Daltons; from about 1300 to about 1800 Daltons; even from 1400 to about 1600 Daltons.

The process of any preceding embodiment, wherein the b unit has an ethylene oxide content of from about 30 to about 55%, from about 35 to about 50%, even to about 40 to about 50%, and the c unit has a blend average molecular weight of from about 400 to about 600 Daltons and an ethylene oxide content of from about 40 to 50%.

The process of any preceding embodiment, wherein the c unit has a blend average molecular weight of from about 250 to about 750 Daltons; from about 300 to about 700 Daltons; even from about 400 to about 600 Daltons.

The process of any preceding embodiment, wherein the c unit has an ethylene oxide content of from about 5 to about 40%; from about 10 to about 30%; from about 15 to about 20%; and even about 40 to 50%.

The process of any preceding embodiment, where in the surfactant is present in an concentration of from about 0.1 to about 5 pphp, more particularly in an amount of from about 0.1 to about 3 pphp and even more particularly in an amount of from about 0.6 to about 2 pphp, where pphp means parts per hundred parts polyol.

Also provided is a process for producing a laminate comprising heat bonding a substrate to a polyurethane foam, wherein the polyurethane foam is produced by the process of any of the preceding embodiments.

Also provided is a laminate or composite comprising such foams.

In one embodiment, the substrate is chosen from wood, paper, metal, a leather material, a fabric, a plastic, a foam, or a combination of two or more thereof.

In one embodiment, the substrate is chosen from a polyvinyl chloride material.

In one aspect, the present invention provides a process for producing a laminate or composite structure, the process comprising heat bonding a substrate to a polyurethane foam, wherein the polyurethane foam is produced by reacting a composition comprising:

(a) a polyether polyol containing a functionality of 2 to 6 and a number average molecular weight of about 1,000 to about 10,000 g/mole;

(b) a polyisocyanate;

(c) at least one catalyst for the production of a polyurethane foam;

(d) a flame lamination additive;

(e) a flame retardant additive;

(f) at least one blowing agent comprising water; and

(g) a silicone surfactant comprising silicone-containing polymer of the formula:

$$R-Si(CH_3)_2O-(Si(CH_3)_2O-)_x-(SiCH_3R^1O-)_a-(SiCH_3R^2O-)_b-(SiCH_3R^3O-)_c-(SiCH_3R^4O-)_d-Si(CH_3)_2-R$$

where $R^1$, $R^2$, and $R^3$ are polyalkylene oxide poly ethers of the formula

$$-B-C_nH_{2n}O-(C_2H_4O)_e-(C_3H_6O)_f-(C_4H_8O)_g-Z,$$

$R^1$ has a blend average molecular weight in the range of from about 3000 to about 6000 grams/mole and ethylene oxide is from about 20 to about 60 weight percent of the alkylene oxide content of the polyether;

$R^2$ has a blend average molecular weight in the range of from about 800 to about 2900 grams/mole and ethylene oxide is from about 20 to about 60 weight percent of the alkylene oxide content of the polyether;

$R^3$ has a blend average molecular weight in the range of from about 130 to about 800 grams/mole and ethylene oxide is from 0 to about 75 weight percent of the alkylene oxide content of the polyether;

$R^4$ is an substituted or unsubstituted alkyl, alkaryl, or aryl group of $C_1$ to $C_{12}$; B is derived from a moiety capable of undergoing hydrosilation;

Z is selected from the group consisting of hydrogen, $C_1$-$C_8$ alkyl or aralkyl moieties, $-C(O)Z^1$, $-C(O)OZ^1$, and $-C(O)NHZ^1$, where $Z^1$ represents mono-functional $C_1$-$C_8$ alkyl or aryl moieties;

each R is independently selected from the group consisting of $R^1$, $R^2$, $R^3$, and $R^4$;

x is 40 to 150;

y is 5 to 40 and equals a+b+c+d, where b or c, but not both, may be 0, d/(a+b+c)=0 to 1, and a+b>0; x/y $\leq$ 7; n $\geq$ 4; and e, f, and g are defined by the molecular weight required by the polyether.

In one embodiment, x/y is about 4 to about 7.

In one embodiment, wherein the surfactant comprises an a unit, a b unit, and a c unit.

In one embodiment, wherein the a unit has a blend average molecular weight of from about 4000 to about 4500 Daltons and an ethylene oxide content of from about 40 to about 50%; the b unit has a blend average molecular weight of from about 1400 to about 1600 Daltons and an ethylene oxide content of from about 40 to about 50%, and the c unit has a blend average molecular weight of from about 400 to about 600 Daltons and an ethylene oxide content of from about 40 to 50%.

In one embodiment, the surfactant comprises an a unit, a b unit, and a d unit.

In one embodiment, wherein the surfactant comprises an a unit, a c unit, and a d unit.

In one embodiment, wherein the surfactant comprises an a unit and a c unit.

In one embodiment, wherein the a unit has a blend average molecular weight of from about 4000 to about 4500 Daltons and an ethylene oxide content of from about 40 to about 50%; and the c unit has a blend average molecular weight of from about 400 to about 600 Daltons and an ethylene oxide content of from about 40 to 50%.

In one embodiment, wherein the substrate is chosen from wood, paper, metal, a leather material, a fabric, a plastic, a foam, or a combination of two or more thereof.

In one embodiment, wherein the substrate is chosen from a polyvinyl chloride material.

DETAILED DESCRIPTION

The present invention provides a polyether polyurethane foam composition that is heat bondable to a substrate such as by, for example, flame lamination. The present invention also provides processes for forming such foams, laminates formed by heat bonding the polyether polyurethane foam to a substrate, and articles comprising such laminates. The polyether polyurethane foam compositions comprise a silicone-based surfactant comprising different acetoxy capped polyether based pendant groups. The silicone-based surfactant may be referred to as a "comb-type" silicone copolymer. It has been found that employing a low to moderate molecular weight surfactant with a low ratio of alkyl substituted siloxane groups to siloxane units having the acetoxy capped polyether based pendant groups can be used to provide a heat bondable polyether polyurethane foam with desirable stabilization properties, flame retardance, and/or bonding properties when provided in a laminate structure.

In one aspect, the present invention provides a foam forming composition comprising (a) a polyether polyol; (b) an organic polyisocyanate or polyisocyanate prepolymer; (c) at least one catalyst for the production of polyurethane foams; (d) a flame lamination additive; (e) a flame retardant agent; (f) at least one blowing agent; and (g) a silicone surfactant. The silicone surfactant comprises a silicone-based polymer surfactant comprising acetoxy capped polyether based groups pendant to a silicon atom in the backbone of the silicone-based polymer. By controlling the acetoxy capped polyether groups in terms of their molecular weight and/or ethylene oxide content, it has been found that a polyurethane foam composition that is hear bondable to a substrate.

The silicone surfactant suitable for use in the present invention may be referred to as a "comb-type" silicone polymer and comprise polyether groups pendant to the silicon atoms in the polymer backbone. In particular, the surfactant comprises acetoxy capped polyether pendant groups. In one embodiment, the surfactant is a polymer of the formula:

$$MD_xD'_yM$$

wherein M is $(CH_3)_3SiO_{1/2}$-; D is $-O_{1/2}Si(CH_3)_2O_{1/2}$-; D' is $-O_{1/2}Si(CH_3)R'O_{1/2}$-; x is 40 to 150; y is 5 to 40; x/y $\leqq$ 7; and R' comprises an acetoxy capped polyether. The surfactant comprises at least two different D' groups having different acetoxy capped polyethers from one another with 0 mole percent of the branches being $\geqq$ 75% by weight ethylene oxide content, and the surfactant has a target average molecular weight of about 18,000 to about 35,000 Daltons. In one embodiment, the surfactant comprises two different acetoxy capped polyether groups. In one embodiment, the surfactant comprises three different acetoxy capped polyether groups. In one embodiment, the target average molecular weight is from about 20,000 to about 30,000 Daltons; from about 22,000 to about 28,000 Dalton; even from about 24,000 to about 26,000 Daltons. Here as elsewhere in the specification and claims, numerical values can be combined to form new and non-disclosed ranges.

In one embodiment, the D' group is chosen from a group of the formula:

$$-O_{1/2}Si(CH_3)R^1O_{1/2}- ;$$

$$-O_{1/2}Si(CH_3)R^2O_{1/2}- ;$$

$$-O_{1/2}Si(CH_3)R^3O_{1/2}-;$$

and/or

$$-O_{1/2}Si(CH_3)R^4O_{1/2}-$$

where $R^1$, $R^2$, and $R^3$ are polyalkylene oxide polyethers of the formula

$$-B-C_nH_{2n}O-(C_2H_4O)_e-(C_3H_6O)_f-(C_4H_8O)_g-Z$$

where:

$R^1$ has a blend average molecular weight in the range of from about 3000 to about 6000 grams/mole, and the ethylene oxide (EO) is from about 20 to about 60 weight percent of the alkylene oxide content of the polyether;
$R^2$ has a blend average molecular weight in the range of from about 800 to about 2900 grams/mole, and the ethylene oxide is from about 20 to about 60 weight percent of the alkylene oxide content of the polyether;
$R^3$ has a blend average molecular weight in the range of from about 130 to about 800 grams/mole, and the ethylene oxide is from 0 to about 75 weight percent of the alkylene oxide content of the polyether;
$R^4$ is an substituted or unsubstituted $C_1$-$C_{12}$ alkyl, a substituted or unsubstituted alkaryl, or aryl group of $C_6$ to $C_{12}$;
B is derived from a moiety capable of undergoing hydrosilation;
Z is selected from the group consisting of hydrogen, $C_1$-$C_8$ alkyl or aralkyl moieties,$-C(O)Z^1$, $-C(O)OZ^1$, and $-C(O)NHZ^1$, where $Z^1$ represents mono-functional $C_1$-$C_8$ alkyl or $C_6$-$C_{12}$ aryl moieties; and
D' comprises at least one $-O_{1/2}Si(CH_3)R^2O_{1/2}$- and/or $-O_{1/2}Si(CH_3)R^3O_{1/2}$- group.

In one embodiment, the silicone surfactant is a silicone polymer of the formula:

$$R-Si(CH_3)_2O-(Si(CH_3)_2O-)_x-(SiCH_3R^1O-)_a-(SiCH_3R^2O-)_b-(SiCH_3R^3O-)_c-(SiCH_3R^4O-)_d-Si(CH_3)_2-R$$

where $R^1$, $R^2$, and $R^3$ are polyalkylene oxide polyethers of the formula

$$-B-C_nH_{2n}O-(C_2H_4O)_e-(C_3H_6O)_f-(C_4H_8O)_g-Z,$$

$R^1$ has a blend average molecular weight in the range of from about 3000 to about 6000 grams/mole and ethylene oxide (EO) is from about 20 to about 60 weight percent of the alkylene oxide content of the polyether;
$R^2$ has a blend average molecular weight in the range of from about 800 to about 2900 grams/mole and ethylene oxide is from about 20 to about 60 weight percent of the alkylene oxide content of the polyether;
$R^3$ has a blend average molecular weight in the range of from about 130 to about 800 grams/mole and ethylene oxide is from 0 to about 75 weight percent of the alkylene oxide content of the polyether;
$R^4$ is an substituted or unsubstituted alkyl, alkaryl, or aryl group of $C_1$ to $C_{12}$;
B is derived from a moiety capable of undergoing hydrosilation;
Z is selected from the group consisting of hydrogen, $C_1$-$C_8$ alkyl or aralkyl moieties, $-C(O)Z^1$, $-C(O)OZ^1$, and

-C(O)NHZ$^1$, where Z$^1$ represents mono-functional $C_1$-$C_8$ alkyl or aryl moieties;
each R is independently selected from the group consisting of R$^1$, R$^2$, R$^3$, and R$^4$;
x is 40 to 150;
y is 5 to 40 and equals a+b+c+d, where b or c, but not both, may be 0, d/(a+b+c)=0 to 1, and a+b > 0; x/y ≤ 7; n ≥ 4; and e, f, and g are defined by the molecular weight required by the polyether.

The R$^1$ moieties may comprise from about 30 to about 55% by weight of EO; from about 35 to about 50% by weight of EO; even about 40 to about 50% of EO. In one embodiment, R$^1$ comprises about 40% EO. The R$^1$ moieties may have a blend average molecular weight (BAMW) greater than 3500 Daltons and, in one embodiment, greater than 4000 Daltons. In one embodiment, the R$^1$ moieties have a BAMW of from about 3500 to about 5000 Daltons in one embodiment from about 4000 to about 4500 Dalton. The R$^2$ moieties may have from about 30 to about 55% by weight of EO; from about 35 to about 50% by weight of EO; even about 40 to about 50% of EO. In one embodiment, R$^2$ comprises about 40% EO. The R$^2$ moieties may have a BAMW in the range of from about 1000 to about 2500 Daltons; from about 1100 to 2300 Daltons; from about 1200 to about 2000 Daltons; from about 1300 to about 1800 Daltons. In one embodiment, about 1400 to about 1600 Daltons. The R$^3$ moieties range from 0 up to about 50% by weight of EO; from about 5 to about 40% by weight of EO; from about 10 to about 30% by weight of EO; even from about 15 to about 20% by weight of EO. In one embodiment, R$^3$ comprises from about 0 to about 40% EO. The R$^3$ moieties, when present, may, in one embodiment have a BAMW in the range of from about 250 to about 750 Daltons; from about 300 to about 700 Daltons; even from about 400 to about 600 Daltons.

There may also be more than one different polyether from each group. For example, a copolymer may comprise (a) two R$^1$-type poly ethers differing in molecular weight and/or EO-content, e.g., 55% EO of 4000 MW and 44% EO of 5500 MW, and (b) an R$^2$-type polyether. In addition, butylene oxide can be substituted for propylene oxide in the polyether backbone. The polyether moieties can be linear or branched and can contain any number of carbon atoms.

The alkyl pendant groups, R$^4$, can be $C_1$-$C_{12}$ substituted or unsubstituted alkyl groups, $C_6$-$C_{12}$ aryl groups, or $C_6$-$C_{12}$ alkaryl groups. In one embodiment, Z is -C(O)CH$_3$ or CH$_3$. B may be an allyl derivative, e.g., propyl, or a methallyl derivative, e.g., isobutyl.

In accordance with the present invention, the silicone surfactants have a x/y ratio of less than or equal to 7. In one embodiment, the x/y ratio is about 2 to about 7; about 3 to about 7; about 4 to about 7; about 4 to about 6. The ratio of x/y includes all whole number and fractional ratios. Here as elsewhere in the specification and claims, numerical values may be combined to form new and non-disclosed ranges.

As described herein, the value "y" is the sum of a+b+c+d. It will be appreciated that the surfactant can comprise any combination of these units with the proviso that b and c are not both 0 (i.e., the surfactant comprises at least one b unit and one c unit, or both b and c units) and a+b>0. In one embodiment, the silicone surfactant comprises a, b, and c units. In one embodiment, the silicone surfactant comprises a, b, and d units. In one embodiment, the silicone surfactant comprises a and c units. In one embodiment, the silicone surfactant comprises a, c, and d units. In one embodiment, the silicone surfactant comprises a, b, c, and d units.

The surfactant can be used in the polyurethane foam-forming compositions at a concentration of from about 0.1 to about 5 pphp, more particularly in an amount of from about 0.1 to about 3 pphp and even more particularly in an amount of from about 0.6 to about 2 pphp, where pphp means parts per hundred parts polyol.

The surfactant can be provided as a surfactant composition comprising the surfactant and a diluent. The concentration of the surfactant in the surfactant composition can be selected as desired for a particular purpose or intended use. In one embodiment, the surfactant concentration in the surfactant composition can be from about 10 % to about 50 % by weight of the surfactant composition, more particularly from about 15% to about 75%, and even more particularly from about 20% to about 50% by weight, based upon the weight of the surfactant composition.

The silicone copolymer has a judicial balance of lipophilic character provided by the amount of silicone or propylene oxide incorporated into the molecule as well as a hydrophilic character provided by the overall amount of ethylene oxide in the molecule. In this fashion, the molecule can act as an improved surface active agent (surfactant), which helps under laminating conditions (melting phase) and allows for optimal performance of flame lamination additives for efficiently bonding with PVC leather or other types of textile fabrics to improve the initial and final bonding strength.

The polyol (a) component can be any polyol useful to form a polyether polyurethane foam and particularly for forming high resilience foam. The polyol is normally a liquid polymer possessing hydroxyl groups. The term "polyol" includes linear and branched polyethers (having ether linkages), polyesters and blends thereof, and comprising at least two hydroxyl groups. In one embodiment, the polyol can be at least one of the types generally used to prepare polyurethane foams. A polyether polyol having a weight average molecular weight of from about 1000 to about 10000 is particularly useful. In one embodiment, the polyether polyol has a weight average molecular weight of from about 2000 to about 8000; from about 3000 to about 6000; even from about 4000 to about 5000.

Polyols containing reactive hydrogen atoms generally employed in the production of high-resilience polyurethane foams can be employed in the formulations of the present invention. The polyols are hydroxy-functional chemicals or polymers covering a wide range of compositions of varying molecular weights and hydroxy functionality. These polyhydroxyl compounds are generally mixtures of several components although pure polyhydroxyl compounds, i.e. individual compounds, can in principle be used.

Representative polyols include, but are not limited to, polyether polyols, polyester polyols, polyetherester polyols, polyesterether polyols, polybutadiene polyols, acrylic component-added polyols, acrylic component-dispersed polyols, styrene-added polyols, styrene-dispersed polyols, vinyl-added polyols, vinyl-dispersed polyols, urea-dispersed polyols, and polycarbonate polyols, polyoxypropylene polyether polyol, mixed poly (oxyethylene/oxypropylene) polyether polyol, polybutadienediols, polyoxyalkylene diols, polyoxyalkylene triols, polytetramethylene glycols, polycaprolactone diols and triols, all of which possess at least two primary hydroxyl groups.

Some specific, non-limiting examples of polyether polyols include, polyoxyalkylene polyol, particularly linear and branched poly(oxyethylene)glycol, poly(oxypropylene)glycol, copolymers of the same and combinations thereof. Non-limiting examples of modified polyether polyols include polyoxypropylene polyether polyol into which is dispersed poly(styrene acrylonitrile) or polyurea, and poly(oxyethylene/oxypropylene) polyether polyols into which is dispersed poly(styrene acrylonitrile) or polyurea.

In one embodiment the polyether polyol is chosen from ARCOL® polyol 1053, ARCOL® E-743, Hyperlite® E-848 from Bayer AG, Voranol® from Dow BASF, Stepanpol®. from Stepan, Terate® from Invista, or combinations of two or more thereof.

The hydroxyl number of a polyol is the number of milligrams of potassium hydroxide required for the complete hydrolysis of the fully acrylated derivative prepared from one gram of polyol. The hydroxyl number is also defined by the following equation, which reflects its relationship with the functionality and molecular weight of the polyol:

$$\text{OH No.} = (56.1 \times 1000 \times f)/\text{M.W.}$$

wherein OH is the hydroxyl number of the polyol; f is the average functionality, that is, average number of hydroxyl groups per molecule of the polyether polyol; and M.W. is the number average molecular weight of the polyether polyol. The average number of hydroxyl groups in the polyether polyol is achieved by control of the functionality of the initiator or mixture of initiators used in producing the polyether polyol.

In one embodiment, the polyol can have a functionality of from about 2 to about 6; from about 3 to about 5; even about 4. It will be understood by a person skilled in the art that these ranges include all subranges there between.

In one embodiment, the polyurethane foam-forming composition comprises a polyether polyol having a hydroxyl number of from about 10 to about 3000, more particularly from about 20 to about 2000 even more particularly from about 30 to about 1000 and still even more particularly from about 35 to about 800. Here as elsewhere in the specification and claims, numerical values can be combined to form new and non-disclosed ranges.

The polyisocyanate (b) can include any organic compound containing at least two isocyanate groups that can be used for production of polyurethane foam. In one embodiment, the polyisocyanate can be an organic compound that comprises at least two isocyanate groups and generally will be any known or later discovered aromatic or aliphatic polyisocyanates.

In one embodiment, the polyisocyanate can be a hydrocarbon diisocyanate, including alkylenediisocyanate and arylene diisocyanate.

Representative and non-limiting examples of polyisocyanates include toluene diisocyanate, diphenylmethane isocyanate, polymeric versions of toluene diisocyanate and diphenylmethane isocyanate, methylene diphenyl diisocyanate (MDI), 2,4- and 2,6-toluene diisocyanate (TDI), triisocyanates and polymethylene poly(phenylene isocyanates) also known as polymeric or crude MDI and combinations thereof. C available 2,4- and 2,6-toluene diisocyanates include Mondur® TDI.

In one embodiment, the polyisocyanate can be at least one mixture of 2,4-toluene diisocyanate and 2,6-toluene diisocyanate wherein 2,4-toluene diisocyanate is present in an amount of from about 80 to about 85 weight percent of the mixture and wherein 2,6-toluene diisocyanate is present in an amount of from about 20 to about 15 weight percent of the mixture. It will be understood by a person skilled in the art that these ranges include all subranges there between.

The amount of polyisocyanate included in the polyurethane foam-forming composition relative to the amount of other materials in the polyurethane foam-forming composition is described in terms of "Isocyanate Index." "Isocyanate Index" refers to the actual amount of polyisocyanate used divided by the theoretically required stoichiometric amount of polyisocyanate required to react with all active hydrogen in polyurethane foam-forming composition multiplied by one hundred (100).

In one embodiment, the Isocyanate Index in the polyurethane foam-forming composition is from about 60 to about 300, more particularly from about 70 to about 200, even more particularly from about 80 to about 120. It will be understood by a person skilled in the art that these ranges include all subranges there between.

The catalyst (c) for the production of the polyurethane foams herein can be a single catalyst or mixture of catalysts that can be used to catalyze the reactions of polyol and water with polyisocyanates to form polyurethane foam. It is common, but not required, to use both an organoamine and an organotin compound for this purpose. Other metal catalysts can be used in place of, or in addition to, organotin compound.

Representative examples of the catalyst (c) include, but are not limited to:

- tertiary amines such as bis(2,2'-dimethylamino)ethyl ether, trimethylamine, triethylenediamine, 1,8-diazabicyclo[5.4.0]undec-7-ene, triethylamine, N-methylmorpholine, N,N-ethylmorpholine, N,N-dimethylbenzylamine, N,N-dimethylethanolamine, N,N,N',N'-tetramethyl-1,3-butanediamine, pentamethyldipropylenetriamine, triethanolamine, triethylenediamine, 2-{[2-(2-dimethylaminoethoxy)ethyl]methylamino}ethanol, pyridine oxide, and the like;
- strong bases such as alkali and alkaline earth metal hydroxides, alkoxides, phenoxides, and the like;
- acidic metal salts of strong acids such as ferric chloride, stannous chloride, antimony trichloride, bismuth nitrate and chloride, and the like;
- chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceone-alkylenediimines, salicylaldehydeimine, and the like, with various metals such as Be, Mg, Zn, Cd, Pb, Ti, Zr, Sn, As, Bi, Cr, Mo, Mn, Fe, Co, Ni, or such ions as $MoO_2^{++}$, $UO_2^{++}$, and the like;
- alcoholates and phenolates of various metals such as $Ti(OR)_4$, $Sn(OR)_4$, $Sn(OR)_2$, $Al(OR)_3$, and the like, wherein R is alkyl or aryl of from 1 to about 12 carbon atoms, and reaction products of alcoholates with carboxylic acids, beta-diketones, and 2-(N,N-dialkylamino) alkanols, such as well known chelates of titanium obtained by this or equivalent procedures;
- salts of organic acids with a variety of metals such as alkali metals, alkaline earth metals, Al, Sn, Pb, Mn, Co, Bi, and Cu, including, for example, sodium acetate, potassium laurate, calcium hexanoate, stannous acetate, stannous octoate, stannous oleate, lead octoate, metallic driers such as manganese and cobalt naphthenate, and the like;
- organometallic derivatives of tetravalent tin, trivalent and pentavalent As, Sb, and Bi, and metal carbonyls of iron and cobalt; and
- combinations of two or more thereof.

In one embodiment, the catalyst (c) is an organotin compound that is a dialkyltin salt of a carboxylic acid, including the non-limiting examples of dibutyltin diacetate, dibutyltin dilaureate, dibutyltin maleate, dilauryltin diacetate, dioctyltin diacetate, dibutyltin-bis(4-methylaminobenzoate), dibutyltindilaurylmercaptide, dibutyltin-bis(6-methylaminocaproate), and the like, and combinations of two or more thereof.

Similarly, in another embodiment there may be used trialkyltin hydroxide, dialkyltin oxide, dialkyltin dialkoxide, or dialkyltin dichloride, and combinations of two or more thereof can be employed. Non-limiting examples of these compounds include trimethyltin hydroxide, tributyltin hydroxide, trioctyltin hydroxide, dibutyltin oxide, dioctyltin oxide, dilauryltin oxide, dibutyltin-bis(isopropoxide) dibutyltin-bis(2-dimethylaminopentylate), dibutyltin dichloride, dioctyltin dichloride, and the like, and combinations of two or more thereof.

In one embodiment, the catalyst can be an organotin catalyst such as stannous octoate, dibutyltin dilaurate, dibutyltin diacetate, stannous oleate, or combinations of two or more thereof. In another embodiment, the catalyst can be an organoamine catalyst, for example, tertiary amine such as trimethylamine, triethylamine, triethylenediamine, bis(2,2-dimethylamino)ethyl ether, N-ethylmorpholine, diethylenetriamine, 1,8-diazabicyclo[5.4.0]undec-7-ene, or combinations of two or more thereof. In still another embodiment, the catalyst can include mixtures of tertiary amine and glycol, such as Niax® catalyst C-183 (Momentive Performance Materials, Inc.), stannous octoate, such as Niax® catalyst D-19 (Momentive Performance Materials, Inc.), or combinations of two or more thereof.

According to one embodiment of the present invention, the catalyst is an amine catalyst for the production of high resilience flexible slabstock and molded foams. These amine catalysts can be bis(N,N-dimethylaminoethyl)ether or 1,4-diazabicyclo[2.2.2]octane.

In another embodiment amine catalysts can include mixtures of tertiary amine and glycol, such as Niax® catalyst C-183, stannous octoate, such as Niax® catalyst D-19 and combinations thereof, all available from Momentive Performance Materials.

The polyurethane foam-forming composition can include a blowing agent. The blowing agent can be one blowing agent of the physical and/or chemical type. Typical physical blowing agents include, but are not limited to methylene chloride, acetone, water or $CO_2$, which are used to provide expansion in the foaming process. A typical chemical blowing agent is water, which reacts with isocyanates in the foam, forming reaction mixture to produce carbon dioxide gas. These blowing agents possess varying levels of solubility or compatibility with the other components used in the formation of polyurethane foams. Developing and maintaining a good emulsification when using components with poor compatibility is critical to processing and achieving acceptable polyurethane foam quality.

The composition includes flame retardant additives. Examples of suitable flame retardant additives include, but are not limited to intumescence-producing substances, alkali silicates, melamine, melamine polyphosphate, melamine cyanurate, aluminum hydroxide, magnesium hydroxide, ammonium polyphosphates, organic phosphates, or else flame-proofing halogen compounds are suitable. Likewise plasticizers, nucleating agents, IR absorbers such as carbon and graphite, aluminum oxide powders or $Al(OH)_3$, soluble and insoluble dyes, substances acting as biocides (such as fungicides) and pigments are also suitable as additives. The flame retardant additives may be used in the polyurethane foam-forming compositions at a concentration of from about 1 to about 30 pphp, more particularly in an amount of from about 10 to about 20 pphp and even more particularly in an amount of from about 10 to about 16 pphp, were pphp means parts per hundred parts polyol.

The composition includes compounds for improving the bond strength in flame lamination. Examples of suitable flame lamination additives include, but are not limited to, phosphorus-containing flame retardants and polyols having aromatic structural units. Particularly suitable flame lamination additives include, but are not limited to, high molecular weight flame retardants such as Fyrol PNX from AKZO and Exolit OP 560 from Clariant, and also bisphenol A alkoxylates. The compounds for improving the bond strength may be used in the polyurethane foam-forming compositions at a concentration of from about 1 to about 10 pphp, more particularly in an amount of from about 1 to about 8 pphp and even more particularly in an amount of from about 1 to about 6 pphp, were pphp means parts per hundred parts polyol.

In forming the polyurethane from the present compositions, the polyether polyol can be blended with an appropriate amount of isocyanate corresponding to the isocyanate indexes previously discussed is added and stirred with the polyol, and the other components in the composition including the present surfactant compounds. The polyol/isocyanate mixture is optionally maintained under vacuum until foaming stops and then poured into mold. A resulting polyurethane foam can be cured either at room temperature or at higher temperature.

The foam may be prepared by a slabstock process, or any other suitable process within the skill in the art, for instance by various molding processes. Slabstock processes are of particular interest because the polyurethane foam layer used to make laminates by flame bonding and/or high frequency welding can be produced by slicing such foam buns. In a slabstock process, the components are mixed and poured into a trough or other region where the formulation reacts, expands freely in at least one direction, and cures. Slabstock processes are generally operated continuously at commercial scales to obtain square buns, that is, buns with a flat top. Slabstock processes may also be operated in a discontinuous or box foam process, preferably using a lid. Another option is to produce continuous shapes such as cylinders of foam either continuously or discontinuously which can subsequently be peeled. The various components are introduced individually, or in various subcombinations, into a mixing head, where they are mixed and dispensed either on a moving conveyor or in a mold.

The present invention applies to flexible polyurethane foams, which may have a regular cell structure. In one embodiment, the foams may have a density between about 10 and 80 kg/m³, and, independently may have, a resiliency of at least about 30 percent. Regular cell structure means that cells have almost identical shape and dimensions throughout the foam bun. In one embodiment, the foams have no pin-holes larger than about 0.5 millimeter in diameter. The laminate thickness may be chosen as desired for a particular purpose or intended application. In one embodiment the foam has a thicknesses of at least about 0.5; at least about 1 millimeter; at least about 2 millimeters; at least about 4 millimeters; at least about 5 millimeters; at least about 8 millimeters; at least about 10 millimeters; even up to about 15 millimeters. In one embodiment, the foam has a thickness of from about 0.5 millimeters to about 15 millimeters; from about 1 to about 12 millimeters; from about 2 to about 10 millimeters; even from about 5 to about 8 millimeters. In one embodiment, the foam has a thickness of from about 4 to about 10 millimeters.

The invention includes laminates comprising at least one polyether based foam prepared using the present surfactants and at least one substrate bonded directly adjacent to the foam using a heat bonding process. The heat bonding process may be, for example, a flame bonding or high frequency welding process. The laminates may be structurally distinguished by being bonded through resolidified melted polyurethane rather than through an adhesive having a composition different from the foam or substrate bonded thereto.

Suitable substrates include any material that can be heat bonded to the foam. Such substrates include, but are not limited to, wood (including wood pulp, pulp composites, lumber, sheets, wood structures), paper, metal (including sheets, structures, foils), fabrics including spun, woven, knitted, felted, matted, non-woven, fleece and textile fabrics produced from natural and synthetic fibers such as cotton, wool, silk, linen, jute, hemp, sisal, nylon, polyester, polyacrylonitrile, vinylchloride-acrylonitrile copolymer, polyester, polyamide, rayon, polyurethane, spandex and the like and combinations thereof. Other useful substrates include, but are not limited to, plastic film, sheets, structures, or foams prepared from melamine or melamine-formaldehyde, polyether polyurethane, polyester polyurethane, polyvinylchloride, vinylchloride-vinyl acetate copolymers, vinylidene chloride homopolymers and copolymers, ethylene vinyl acetate (EVA), cellophane, polyolefins including polyethylene and polypropylene, polystyrene and the like and combinations thereof. Structures comprising at least one layer of the foam laminated to at least one substrate which may be the same or, preferably, of a different composition, are also referred to herein as composite structures and optionally include additional materials, in layers or other shapes. The composite structures are optionally of any shape or configuration within the art.

Foams formed from the present composition are heat bondable, especially flame bondable, and able to be welded using high frequency welding (e.g., ultrasonic welding). Dielectric and hot plate heat bonding are also effective using these foams. The invention also contemplates a process for producing the laminated structure or composite structure which comprises heat sealing at least one substrate to at least one polyurethane foam, said foam being produced as described previously.

In case of flame lamination the laminates and composite structures may be produced by heating part or all of the surface of the polyurethane foam previously described to a temperature above the fusion temperature of the foam to form a tacky liquid or semiliquid layer, and immediately thereafter or at the same time with the heating operation, contacting a substrate with the tacky surface of the foam, and cooling such that a bond forms between the foam and the substrate. Depending on the degree and rate of solidification needed to form a bond sufficient for further processing, there may be an optional step after contacting the substrate with the tacky surface of holding the substrate in contact with the tacky surface. The fusion temperature of the foam can vary depending upon the nature and amount of the components therein, but in general can range from about 205° C. to about 316° C. It is generally desirable not to heat the surface of the foam to a temperature higher than about 38° C. above the fusion temperature of the particular foam. In the case of high frequency welding, the foam and the substrate(s) are compressed between two electrodes in order to heat the complex until it becomes both thermoformable and weldable. This temperature is about 200° C. In keeping the substrate in contact with the melted or thermoformed surface of the foam until the surface has cooled and at least partially resolidified, it is often desirable to employ a certain amount of pressure to maintain the foam and substrate in contact until the bonding and/or welding occurs. This pressure is optionally as low as that resulting from the weight of the foam or the substrate, but is preferably of the order of from about 0.1 to about 150 or more pounds per square inch (about 7 to 1,000 kPa). Low pressures apply to flame bonding, high pressures to high frequency welding. Those skilled in the art recognize that in most processes pressure is maintained for at least 24 hours in case of flame bonding, that is, during cooling and resting of the laminates, while the pressure is released immediately after high frequency welding which is a discontinuous operation.

The heat can be applied to the surface of the foam by any convenient means, for example, a flame, a hot surface such as a "hot plate", infrared heating, etc. However, this invention is particularly useful in flame bonding. Alternatively, heat may be supplied by high frequency radiation or dielectric means. High frequency radiation includes ultrasound treatment with sound waves in the ultrasonic region.

Foams of the invention and laminates or composite systems comprising such foams are useful for any of the uses of existing foams, such as, but not limited to, insulation, seat covers, crash pads, door panels, comfort applications such as mattresses, pillows and cushioning, for instance for seating, for sound absorption, for vibration dampening and combinations thereof, including uses such as headliners, padded clothing, sport shoes, plastic and leather bags, boots and house slippers as insoles, sleeping bags, and the like and combinations thereof. Additionally, the bonded foams are useful in a variety of packaging and cushioning applications, such as mattresses, packaging, bumper pads, sport and medical equipment, helmet liners, pilot seats, earplugs, and various noise and vibration dampening applications.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

EXAMPLES

In the Examples and Tables described herein, the following materials were used:

Poly ether Polyol Voranol 3010 from Dow Chemical

- Niax* Catalyst A-1 from Momentive Performance Materials
- Niax* Catalyst SA-800 from Momentive Performance Materials
- Niax* D-19 from Momentive Performance Materials
- Niax* Flame Lamination Ether FLE-200 from Momentive Performance Materials
- Mondur TDI-80 toluene diisocyanate from Bayer Material Science
- WSFR 504LF, liquid flame retardant agent from Zhejiang Wansheng Company

Examples 1-5

The surfactants used in these experiments are of the formula:

$$MD_xD'_yM$$

where M is $(CH_3)_3SiO_{1/2}$-; D is $-O_{1/2}Si(CH_3)_2O_{1/2}$-; D" is $-O_{1/2}Si(CH_3)R'O_{1/2}$--, and R' is R [1], R[2], or R[3], R[4]. R[1], R[2], and R[3] are acetoxy capped polyethers, and R[4] is an substituted or unsubstituted alkyl, alkaryl, or aryl group of $C_1$ to $C_{12}$. Further details of the R' groups are provided for the particular surfactant examples.

Surfactant S 1

Surfactant S1 is a compound of the formula MDxD'yM where R' is composed of two different acetoxy capped polyethers with about 80 mole percent of the branches being ≧75% by weight EO content and a target average MW of about 15,000 Daltons. With a D/D' ≧=8. Surfactant S1 is a comparative example and not considered an inventive surfactant.

Surfactant S2

S2 is a compound of the formula MDxD'yM where R' is composed of two different acetoxy capped polyethers with about 0 mole percent of the branches being ≧75% by weight EO content and a target average MW of about 17,000 Daltons. With a D/D' ≧=8. Surfactant S2 is a comparative example and not considered an inventive surfactant.

Surfactant S3

Surfactant S3 is a compound of the formula MDxD'yM where R' is composed of three different acetoxy capped polyethers with about 0 mole percent of the branches being ≧75% by weight EO content and a target average MW of about 30,000 Daltons. Polyether a and polyether b are blended together, and then combined with polyether c at a ratio of (polyether a+polyether b)/polyether c of 1.0. The ratio of D/D' is in the range of 6 to 7.

Surfactant S4

Surfactant S4 is a compound of the formula MDxD'yM where R' is composed of one unsubstituted alkaryl and two different acetoxy capped polyethers with about 0 mole percent of the branches being ≧75% by weight EO content and a target average MW of about 20,000 Daltons. The ratio of D/D" is in the range of 4 to 7.

Surfactant S5

Surfactant S5 is a compound of the formula MDxD'yM where R' is composed of two different acetoxy capped polyethers with 0 mole percent of the branches being ≧75% by weight EO content and a target average MW of about 23,000 Daltons. The ratio of D/D" is in the range of 4 to 7.

Preparation of Flexible Slabstock Polyurethane Foam

These experiments were designed to directly compare the critical flame lamination characteristics of foam of initial bonding strength and final bonding strength at all the same airflow condition.

Silicone surfactants S1, S2, S3, S4 and S5 were used to prepare polyurethane foams of Formulation I (listed in Table 1) by hand-mixing foam evaluation in the laboratory. The produced foams have comparable airflow for valid foam characteristic comparisons by minor catalyst adjustments.

Table 1

| Examples | Example 1* | Example 2* | Example 3 | Example 4 | Example 5 |
|---|---|---|---|---|---|
| Voranol 3010 OH value: 56.5mgKOH/g | 100 | 100 | 100 | 100 | 100 |
| Water | 3.80 | 3.80 | 3.80 | 3.80 | 3.80 |
| Niax* Catalyst A-1 | ~ 0.10 | ~ 0.10 | ~ 0.10 | ~ 0.10 | ~0.10 |

(continued)

| Examples | Example 1* | Example 2* | Example 3 | Example 4 | Example 5 |
|---|---|---|---|---|---|
| Niax* Flame Lamination Ether FLE-200 | 3.00 | 3.00 | 3.00 | 3.00 | 3.00 |
| Niax* D-19 | ~0.15 | ~ 0.15 | ~ 0.15 | ~ 0.15 | ~0.15 |
| Toluene Diisocyanate Index | 105 | 105 | 105 | 105 | 105 |
| S1 | 1.00 | | | | |
| S2 | | 1.00 | | | |
| S3 | | | 1.00 | | |
| S4 | | | | 1.00 | |
| S5 | | | | | 1.00 |
| * Comparative Example | | | | | |

Flame Lamination Process

After the foams were cured, the foams were skived into a 4 mm thickness piece with 25 cm width by a skiving machine. A skived thin foam piece and PVC leather (grey color, used in passenger-car seating covering) were laminated by a pilot flame lamination machine (manufactured by PLA-MA, Type LLM-05) in the processing condition of 10 mm flame distance to the "blue flame" and 30 m/min lamination speed.

Flame Laminated Foam Physical Properties Measurement

Bonding Strength Measurement

The initial bonding strength was measured after 3 mins of flame lamination by Zwich machine in accordance with DIN 53 357 method.

The final bonding strength was measured after 24 h of flame lamination by Zwich machine in accordance with DIN 53 357 method.

Foam Airflow and breathability

Foam airflow was measured by air flow tester in accordance with ASTM D3574.

Flame laminated foams airflow, final bonding strength, and initial bonding strength improvement were compared to Example 1, and final bonding strength improvement compared to Example 1 are listed in Table 2.

Table 2

| Examples | | Example 1* | Example 2* | Example 3 | Example 4 | Example 5 |
|---|---|---|---|---|---|---|
| Surfactant | | S1 | S2 | S3 | S4 | S5 |
| D/D' Ratio | | >8.4 | >8.4 | <7.0 | <5.5 | <5.5 |
| Air Flow | L/min | 172 | 172 | 182 | 184 | 196 |
| Initial Bonding Strength @ 3 min | N/40mm | 1.67 | 1.78 | 1.83 | 1.97 | 2.02 |
| Initial Bonding Strength Improvement to Example 1 | % | 0 | 7 | 10 | 18 | 21 |
| Final Bonding Strength @ 24 h | N/40mm | 4.27 | 4.75 | 4.84 | 5.15 | 5.56 |

(continued)

| Examples | | Example 1* | Example 2* | Example 3 | Example 4 | Example 5 |
|---|---|---|---|---|---|---|
| Final Bonding Strength Improvement compared to Example 1 | % | 0 | 11 | 13 | 21 | 30 |
| * Comparative Example | | | | | | |

Examples 1-5 possess comparable airflow performance, which provides a valid foam flame lamination bonding strength comparison.

Table 2 shows the examples of foams made by five silicone surfactants with different D/D" ratio and their flame lamination initial and final bonding strength. Surfactant S1, which is used in industry, was used as a control that is not part of this invention.

Example 1 to Example 2 using the S1 and S2 surfactants, respectively, have a higher D/D" ratio that is greater than 8.4. The initial bonding strength of Example 2 is 7% higher than that of Example 1.

The foam of Example 3 made by surfactant S3 having a D/D" ratio lower than 7.0 and was found to have flame lamination foam initial bonding strength 10% higher than Example 1 and a final bonding strength 13% higher than Example 1. This falls in the 10% to 30% bonding strength improvement range.

The foam of Example 4 made by surfactant S4 having a D/D" ratio lower than 5.5 and three pendant R' groups, is a flame lamination foam with an initial bonding strength that is 18% higher than Example 1 and final bonding strength that is 21% higher than Example 1, which falls in the 10% to 30% bonding strength improvement range.

The foam of Example 5 made by surfactant S5 having a D/D" ratio lower than 5.5 and two pendant R' groups, is a flame lamination foam with an initial bonding strength that is 21% higher than Example 1 and a final bonding strength that is 30% higher than Example 1, which falls in the 10% to 30% bonding strength improvement range.

Examples 6-11: Flame Retardant level and Flame Lamination ether additive level Foaming Results

Flame Lamination Foam FR Performance

Flame lamination foam FR performance was measured in accordance with FMVSS302 ((GB8410-2006 Flammability of automotive interior materials).

The following Examples also focus on foam flame lamination properties and flammability of laboratory foam prepared by the laboratory hand-mixing foam equipment using virtually identical chemical formulations (Table 3) and hand-mixing foaming conditions with the primary difference between experiments being the replacement of one surfactant composition with another and reducing the flame retardants level by 10 or 20% or reducing the flame lamination additive by 10% or 20%. For some formulations, minor catalyst adjustments (changes in relative amounts by weight) were required to the above formulation to produce foam of comparable airflow for valid foam characteristic comparisons.

Table 3

| Example | Example 6* | Example 7 | Example 8 | Example 9 | Example 10 | Example 11 |
|---|---|---|---|---|---|---|
| Voranol 3010 OH value: 56.5mgKOH/g | 100 | 100 | 100 | 100 | 100 | 100 |
| WSFR 504LF | 12.0 | 12.0 | 10.8 | 9.6 | 12.0 | 12.0 |
| Water | 3.85 | 3.85 | 3.85 | 3.85 | 3.85 | 3.85 |
| Niax* Catalyst SA-800 | ~0.25 | ~ 0.25 | ~ 0.25 | ~ 0.25 | ~ 0.25 | ~ 0.25 |
| Niax* Flame Lamination Ether FLE-200 | 3.00 | 3.00 | 3.00 | 3.00 | 2.70 | 2.40 |
| Niax*D-19 | ~ 0.20 | ~ 0.20 | ~ 0.20 | ~ 0.20 | ~ 0.20 | ~ 0.20 |
| Toluene Diisocyanate Index | 112 | 112 | 112 | 112 | 112 | 112 |
| S1 | 1.00 | | | | | |

(continued)

| Example | Example 6* | Example 7 | Example 8 | Example 9 | Example 10 | Example 11 |
|---|---|---|---|---|---|---|
| S5 | | 1.00 | 1.00 | 1.00 | 1.00 | 1.00 |
| * Comparative Example | | | | | | |

The results in Table 4 show that a flame lamination foam made by Surfactant S5 with D/D" ratio less than 5.5 demonstrates higher final bonding strength than a flame lamination foam made by Surfactant S1 with a D/D" ratio greater than 8.4. Surfactant S5 affords a great reduction of using 10% to 20% less flame retardant agents while maintaining the same or slightly better final bonding strength, airflow and FR performance.

Table 4

| Examples | | Example 6* | Example 7 | Example 8 | Example 9 | Example 10 | Example 11 |
|---|---|---|---|---|---|---|---|
| Surfactant | | S1 | S5 | S5 | S5 | S5 | S5 |
| D/D' | | >8.4 | <5.5 | <5.5 | <5.5 | <5.5 | <5.5 |
| FR agent use level | | 12 pphp | same as example 6 | 10% less than example 6 | 20% less than example 6 | same as example 6 | same as example 6 |
| Flame lamination additive use level | | 3 pphp | same as Example 6 | same as example 6 | same as example 6 | 10% less than example 6 | 20% less than example 6 |
| Air Flow | L/min | 132 | 159 | 138 | 149 | 164 | 167 |
| Final Bonding Strength @ 24 h | N/40mm | 5.50 | 6.6 | 6.3 | 6.03 | 6.00 | 5.78 |
| Final Bonding Strength Improvement compared to Example 1 | % | 0 | 20 | 15 | 10 | 9 | 5 |
| FR Performance (FMVSS302/GB8410-2006) | | PASS | EASILY PASS | EASILY PASS | PASS | PASS | PASS |
| * Comparative Example | | | | | | | |

EP 3 280 753 B1

The data in Table 4 also indicates that Surfactant S5 allows for using lower concentrations of flame lamination additives because the foams using 10% to 20% less flame lamination additives while maintained the same or slightly better final bonding strength, airflow, and FR performance.

The results in Table 4 confirm that the surfactant structure in this invention provides significantly improved polyether-polyurethane flame lamination foam bonding strength, even 10 to 30% improved bonding strength.

**Claims**

1. A process for producing a flame lamination polyurethane foam slabstock comprising reacting a composition comprising:

    (a) a polyether polyol containing a functionality of 2 to 6 and a number average molecular weight of 1,000 to 10,000 g/mole;
    (b) a polyisocyanate;
    (c) at least one catalyst for the production of a polyurethane foam;
    (d) a flame lamination additive;
    (e) a flame retardant additive;
    (f) at least one blowing agent comprising water; and
    (g) a silicone surfactant comprising silicone-containing polymer of the formula:

    $$MD_xD'_yM$$

    wherein M is $(CH_3)_3SiO_{1/2}-$; D is $-O_{1/2}Si(CH_3)_2O_{1/2}-$; D' is $-O_{1/2}Si(CH_3)R'O_{1/2}-$; x is 40 to 150; y is 5 to 40; $x/y \leq 7$; R' is an acetoxy capped polyether; and the surfactant comprises at least two D' units having different acetoxy capped polyethers from one another, the acetoxy capped polyether groups having with 0 mole percent of the branches being $\geq 75\%$ by weight ethylene oxide content; the surfactant having a target average molecular weight of 18,000 to 35,000 Daltons.

2. The process of claim 1, wherein the surfactant has a target average molecular weight of from 20,000 to 30,000 Daltons, preferably from 22,000 to 28,000 Daltons.

3. The process of claim 1 or 2, wherein x/y is from 4 to 7.

4. The process of any of claims 1-3, wherein the surfactant comprises three D' units, each D' unit having a different acetoxy capped polyethers with 0 mole percent of the branches being $\geq 75\%$ by weight ethylene oxide content.

5. A process for producing a flame lamination polyurethane foam slabstock comprising reacting a composition comprising:

    (a) a polyether polyol containing a functionality of 2 to 6 and a number average molecular weight of 1,000 to 10,000 g/mole;
    (b) a polyisocyanate;
    (c) at least one catalyst for the production of a polyurethane foam;
    (d) a flame lamination additive;
    (e) a flame retardant additive;
    (f) at least one blowing agent comprising water; and
    (g) a silicone surfactant comprising silicone-containing polymer of the formula:

    $$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

    where $R^1$, $R^2$, and $R^3$ are polyalkylene oxide polyethers of the formula

    $$\text{-}B\text{-}C_nH_{2n}O\text{-}(C_2H_4O)_e\text{-}(C_3H_6O)_f\text{-}(C_4H_8O)_g\text{-}Z,$$

    $R^1$ has a blend average molecular weight in the range of from 3000 to 6000 grams/mole and ethylene oxide is from 20 to 60 weight percent of the alkylene oxide content of the polyether;

$R^2$ has a blend average molecular weight in the range of from 800 to 2900 grams/mole and ethylene oxide is from 20 to 60 weight percent of the alkylene oxide content of the polyether;

$R^3$ has a blend average molecular weight in the range of from 130 to 800 grams/mole and ethylene oxide is from 0 to 75 weight percent of the alkylene oxide content of the polyether;

$R^4$ is an substituted or unsubstituted alkyl, alkaryl, or aryl group of $C_1$ to $C_{12}$; B is derived from a moiety capable of undergoing hydrosilation;

Z is selected from the group consisting of hydrogen, $C_1$-$C_8$ alkyl or aralkyl moieties, $-C(O)Z^1$, $-C(O)OZ^1$, and $-C(O)NHZ^1$, where $Z^1$ represents mono-functional $C_1$-$C_8$ alkyl or aryl moieties;

each R is independently selected from the group consisting of $R^1$, $R^2$, $R^3$, and $R^4$;

x is 40 to 150;

y is 5 to 40 and equals a+b+c+d, where b or c, but not both, may be 0, d/(a+b+c)=0 to 1, and a+b>0; $x/y \leq 7$; $n \geq 4$; and e, f, and g are defined by the molecular weight required by the polyether.

6. The process of claim 5, wherein x/y is $\leq 6$.

7. The process of claim 5, wherein x/y is 3 to 7.

8. The process of claim 5, wherein x/y is 4 to 7.

9. The process of any of claims 5-8, wherein the surfactant comprises an a unit, a b unit, and a c unit.

10. The process of claim 9, wherein the a unit has a blend average molecular weight of from 4000 to 4500 Daltons and an ethylene oxide content of from 40 to 50%; the b unit has a blend average molecular weight of from 1400 to 1600 Daltons and an ethylene oxide content of from 40 to 50%, and the c unit has a blend average molecular weight of from 400 to 600 Daltons and an ethylene oxide content of from 40 to 50%.

11. The process of any of claims 5-8, wherein the surfactant comprises an a unit, a b unit, and a d unit.

12. The process of any of claims 5-8, wherein the surfactant comprises an a unit, a c unit, and a d unit.

13. The process of any of claims 5-8, wherein the surfactant comprises an a unit and a c unit.

14. The process of claim 13, wherein the a unit has a blend average molecular weight of from 4000 to 4500 Daltons and an ethylene oxide content of from 40 to 50%; and the c unit has a blend average molecular weight of from 400 to 600 Daltons and an ethylene oxide content of from 40 to 50%.

15. The process of any of claims 5-14, wherein the surfactant is present in the composition at concentration of from 0.1 to 5 pphp, where pphp is parts per hundred parts polyol.

16. A process for producing a laminate or composite structure, the process comprising heat bonding a substrate to a polyurethane foam, wherein the polyurethane foam is produced by reacting a composition comprising:

(a) a polyether polyol containing a functionality of 2 to 6 and a number average molecular weight of 1,000 to 10,000 g/mole;
(b) a polyisocyanate;
(c) at least one catalyst for the production of a polyurethane foam;
(d) a flame lamination additive;
(e) a flame retardant additive;
(f) at least one blowing agent comprising water; and
(g) a silicone surfactant comprising silicone-containing polymer of the formula:

$$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

where $R^1$, $R^2$, and $R^3$ are polyalkylene oxide polyethers of the formula

$$\text{-}B\text{-}C_nH_{2n}O\text{-}(C_2H_4O)_e\text{-}(C_3H_6O)_f\text{-}(C_4H_8O)_g\text{-}Z,$$

$R^1$ has a blend average molecular weight in the range of from 3000 to 6000 grams/mole and ethylene oxide is from 20 to 60 weight percent of the alkylene oxide content of the polyether;

$R^2$ has a blend average molecular weight in the range of from 800 to 2900 grams/mole and ethylene oxide is from 20 to 60 weight percent of the alkylene oxide content of the polyether;

$R^3$ has a blend average molecular weight in the range of from 130 to 800 grams/mole and ethylene oxide is from 0 to 75 weight percent of the alkylene oxide content of the polyether;

$R^4$ is an substituted or unsubstituted alkyl, alkaryl, or aryl group of $C_1$ to $C_{12}$;

B is derived from a moiety capable of undergoing hydrosilation;

Z is selected from the group consisting of hydrogen, $C_1$-$C_8$ alkyl or aralkyl moieties, $-C(O)Z^1$, $-C(O)OZ^1$, and $-C(O)NHZ^1$, where $Z^1$ represents mono-functional $C_1$-$C_8$ alkyl or aryl moieties;

each R is independently selected from the group consisting of $R^1$, $R^2$, $R^3$, and $R^4$;

x is 40 to 150;

y is 5 to 40 and equals a+b+c+d, where b or c, but not both, may be 0, d/(a+b+c)=0 to 1, and a+b>0; $x/y \leq 7$; $n \geq 4$; and e, f, and g are defined by the molecular weight required by the polyether.

17. The process of claim 16, wherein x/y is 4 to 7.

18. The process of claims 16 or 17, wherein the surfactant comprises an a unit, a b unit, and a c unit.

19. The process of claim 18, wherein the a unit has a blend average molecular weight of from 4000 to 4500 Daltons and an ethylene oxide content of from 40 to 50%; the b unit has a blend average molecular weight of from 1400 to 1600 Daltons and an ethylene oxide content of from 40 to 50%, and the c unit has a blend average molecular weight of from 400 to 600 Daltons and an ethylene oxide content of from 40 to 50%.

20. The process of claims 16 or 17, wherein the surfactant comprises an a unit, a b unit, and a d unit.

21. The process of claims 16 or 17, wherein the surfactant comprises an a unit, a c unit, and a d unit.

22. The process of claims 16 or 17, wherein the surfactant comprises an a unit and a c unit.

23. The process of claim 22, wherein the a unit has a blend average molecular weight of from 4000 to 4500 Daltons and an ethylene oxide content of from 40 to 50%; and the c unit has a blend average molecular weight of from 400 to 600 Daltons and an ethylene oxide content of from 40 to 50%.

24. The process of any of claims 16-23, wherein the substrate is chosen from wood, paper, metal, a leather material, a fabric, a plastic, a foam, or a combination of two or more thereof.

25. The process of any of claims 16-23, wherein the substrate is chosen from a polyvinyl chloride material.

**Patentansprüche**

1. Verfahren zur Herstellung eines flammlaminierten Polyurethanschaumstoffblocks, umfassend das Umsetzen einer Zusammensetzung, umfassend:

(a) ein Polyetherpolyol enthaltend eine Funktionalität von 2 bis 6 und ein zahlenmittleres Molekulargewicht von 1000 bis 10 000 g/Mol,

(b) ein Polyisocyanat,

(c) mindestens einen Katalysator zur Herstellung eines Polyurethanschaums,

(d) ein Flammlaminierungsadditiv,

(e) ein flammhemmendes Additiv,

(f) mindestens ein Treibmittel, umfassend Wasser,

(g) ein Silikon-grenzflächenaktives Mittel, umfassend ein silikonhaltiges Polymer der Formel:

$$MD_x D'_y M$$

wobei M $(CH_3)_3SiO_{1/2}$- ist; D -$O_{1/2}Si(CH_3)_2O_{1/2}$- ist, D' -$O_{1/2}Si(CH_3)R'O_{1/2}$- ist, x 40 bis 150 ist, y 5 bis 40 ist, x/y ≤ 7 ist, R' ein Acetoxy-verkappter Polyether ist, und das grenzflächenaktive Mittel mindestens zwei D' Einheiten mit voneinander unterschiedlichen Acetoxy-verkappten Polyethern umfaßt, wobei die Acetoxy-verkappten Polyethergruppen mit 0 Mol-% der Verzweigungen ≥ 75 Gew.-% Ethylenoxidanteil sind, wobei das grenzflächenaktive Mittel ein angestrebtes durchschnittliches Molekulargewicht von 18 000 bis 35 000 Dalton aufweist.

2. Verfahren gemäß Anspruch 1, wobei das grenzflächenaktive Mittel ein angestrebtes durchschnittliches Molekulargewicht von 20 000 bis 30 000 Dalton, vorzugsweise von 22 000 bis 28 000 Dalton aufweist.

3. Verfahren gemäß Anspruch 1 oder 2, wobei x/y von 4 bis 7 ist.

4. Verfahren gemäß einem der Ansprüche 1 bis 3, wobei das grenzflächenaktive Mittel drei D' Einheiten umfaßt, wobei jede D' Einheit mit unterschiedlichen Acetoxy-verkappten Polyethern mit 0 Mol-% der Verzweigungen ≥ 75 Gew.-% Ethylenoxidanteil sind.

5. Verfahren zur Herstellung eines flammlaminierten Polyurethanschaumstoffblocks, umfassend das Umsetzen einer Zusammensetzung, umfassend:

   (a) ein Polyetherpolyol enthaltend eine Funktionalität von 2 bis 6 und ein zahlenmittleres Molekulargewicht von 1000 bis 10 000 G/Mol,
   (b) ein Polyestercyanat,
   (c) mindestens einen Katalysator zur Herstellung eines Polyurethanschaums,
   (d) ein Flammlaminierungsadditiv,
   (e) ein flammenhemmendes Additiv,
   (f) mindestens ein Treibmittel, umfassend Wasser, und
   (g) ein Silikon-grenzflächenaktives Mittel, umfassend silikonhaltiges Polymer der Formel:

   $$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

   wobei $R^1$, $R^2$ und $R^3$ Polyalkylenoxidpolyether der Formel sind:

   $$-B\text{-}C_nH_{2n}O\text{-}(C_2H_4O)_e\text{-}(C_3H_6O)_f\text{-}(C_4H_8O)_g\text{-}Z,$$

   $R^1$ ein durchschnittliches Blendmolekulargewicht in dem Bereich von 3000 bis 6000 g/Mol aufweist und Ethylenoxid von 20 bis 60 Gew.-% des Alkylenoxidanteils des Polyethers ist,
   $R^2$ ein durchschnittliches Blendmolekulargewicht in dem Bereich von 800 bis 2900 g/Mol aufweist und Ethylenoxid von 20 bis 60 Gew.-% des Alkylenoxidanteils des Polyethers ist,
   $R^3$ ein durchschnittliches Blendmolekulargewicht in dem Bereich von 130 bis 800 g/Mol aufweist und Ethylenoxid von 0 bis 75 Gew.-% des Alkylenoxidanteils des Polyethers ist,
   $R^4$ eine substituierte oder unsubstituierte Alkyl-, Alkaryl- oder Arylgruppe von $C_1$ bis $C_{12}$ ist,
   B abgeleitet ist von einer Einheit, befähigt zum Eingehen von Hydrosilylierung, Z ausgewählt ist aus der Gruppe, bestehend aus Wasserstoff, $C_1$-$C_8$ Alkyl- oder Aralkyleinheiten, -$C(O)Z^1$, -$C(O)OZ^1$ und -$C(O)NHZ^1$, wobei $Z^1$ monofunktionale $C_1$-$C_8$ Alkyl- oder Aryleinheiten darstellt,
   jedes R unabhängig ausgewählt ist aus der Gruppe, bestehend aus $R^1$, $R^2$, $R^3$ und $R^4$,
   x 40 bis 150 ist,
   y 5 bis 40 ist und gleich a+b+c+d ist, wobei b oder c, aber nicht beide, 0 sein können, d/(a+b+c) = 0 bis 1, und a+b>0, x/y ≤ 7, n ≥ 4 und e, f und g durch das von dem Polyether geforderte Molekulargewicht definiert sind.

6. Verfahren gemäß Anspruch 5, wobei x/y ≤ 6 ist.

7. Verfahren gemäß Anspruch 5, wobei x/y 3 bis 7 ist.

8. Verfahren gemäß Anspruch 5, wobei x/y 4 bis 7 ist.

9. Verfahren gemäß einem der Ansprüche 5-8, wobei das grenzflächenaktive Mittel eine a Einheit, eine b Einheit und eine c Einheit umfaßt.

**10.** Verfahren gemäß Anspruch 9, wobei die a Einheit ein durchschnittliches Blendmolekulargewicht von 4000 bis 4500 Dalton und einen Ethylenoxidanteil von 40 bis 50% aufweist, die b Einheit ein durchschnittliches Blendmolekulargewicht von 1400 bis 1600 Dalton und einen Ethylenoxidanteil von 40 bis 50% aufweist, und die c Einheit ein durchschnittliches Molekulargewicht von 400 bis 600 Dalton und einen Ethylenoxidanteil von 40 bis 50 Prozent aufweist.

**11.** Verfahren gemäß einem der Ansprüche 5-8, wobei das grenzflächenaktive Mittel eine a Einheit, eine b Einheit und eine c Einheit umfaßt.

**12.** Verfahren gemäß einem der Ansprüche 5-8, wobei das grenzflächenaktive Mittel eine a Einheit, ein c Einheit und eine d Einheit umfaßt.

**13.** Verfahren gemäß einem der Ansprüche 5 bis 8, wobei das grenzflächenaktive Mittel eine a Einheit und eine c Einheit umfaßt.

**14.** Verfahren gemäß Anspruch 13, wobei die a Einheit ein durchschnittliches Blendmolekulargewicht von 4000 bis 4500 Dalton und einen Ethylenoxidanteil von 40 bis 50% aufweist, und die c Einheit ein durchschnittliches Blendmolekulargewicht von 400 bis 600 Dalton und einen Ethylenoxidanteil von 40 bis 50% aufweist.

**15.** Verfahren gemäß einem der Ansprüche 5-14, wobei das grenzflächenaktive Mittel in der Zusammensetzung bei einer Konzentration von 0,1 bis 5 pphp vorliegt, wobei pphp Teile pro hundert Teilen Polyol ist.

**16.** Verfahren zur Herstellung eines Laminats oder einer Komposit-Struktur, wobei das Verfahren das Heatbonden eines Substrats an einen Polyurethanschaum umfaßt, wobei der Polyurethanschaum durch Umsetzen einer Zusammensetzung hergestellt worden ist, umfassend:

(a) ein Polyetherpolyol enthaltend eine Funktionalität von 2 bis 6 und ein zahlenmittleres Molekulargewicht von 1000 bis 10 000 G/Mol,
(b) ein Polyestercyanat,
(c) mindestens einen Katalysator zur Herstellung eines Polyurethanschaums,
(d) ein Flammlaminierungsadditiv,
(e) ein flammenhemmendes Additiv,
(f) mindestens ein Treibmittel, umfassend Wasser, und
(g) ein Silikon-grenzflächenaktives Mittel, umfassend silikonhaltiges Polymer der Formel:

$$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

wobei $R^1$, $R^2$ und $R^3$ Polyalkylenoxidpolyether der Formel sind:

$$-B\text{-}C_nH_{2n}O\text{-}(C_2H_4O)_e\text{-}(C_3H_6O)_f\text{-}(C_4H_8O)_g\text{-}Z,$$

$R^1$ ein durchschnittliches Blendmolekulargewicht in dem Bereich von 3000 bis 6000 g/Mol aufweist und Ethylenoxid von 20 bis 60 Gew.-% des Alkylenoxidanteils des Polyethers ist,
$R^2$ ein durchschnittliches Blendmolekulargewicht in dem Bereich von 800 bis 2900 g/Mol aufweist und Ethylenoxid von 20 bis 60 Gew.-% des Alkylenoxidanteils des Polyethers ist,
$R^3$ ein durchschnittliches Blendmolekulargewicht in dem Bereich von 130 bis 800 g/Mol aufweist und Ethylenoxid von 0 bis 75 Gew.-% des Alkylenoxidanteils des Polyethers ist,
$R^4$ eine substituierte oder unsubstituierte Alkyl-, Alkaryl- oder Arylgruppe von $C_1$ bis $C_{12}$ ist,
B abgeleitet ist von einer Einheit, befähigt zum Eingehen von Hydrosilylierung, Z ausgewählt ist aus der Gruppe, bestehend aus Wasserstoff, $C_1$-$C_8$ Alkyl- oder Aralkyleinheiten, $-C(O)Z^1$, $-C(O)OZ^1$ und $-C(O)NHZ^1$, wobei $Z^1$ monofunktionale $C_1$-$C_8$ Alkyl- oder Aryleinheiten darstellt,
jedes R unabhängig ausgewählt ist aus der Gruppe, bestehend aus $R^1$, $R^2$, $R^3$ und $R^4$,
x 40 bis 150 ist,
y 5 bis 40 ist und gleich a+b+c+d ist, wobei b oder c, aber nicht beide, 0 sein können, d/(a+b+c) = 0 bis 1, und a+b>0, x/y $\leq$ 7, n $\geq$ 4 und e, f und g durch das von dem Polyether geforderte Molekulargewicht definiert sind.

17. Verfahren gemäß Anspruch 16, wobei x/y 4 bis 7 ist.

18. Verfahren gemäß Anspruch 16 oder 17, wobei das grenzflächenaktive Mittel eine a Einheit, eine b Einheit und eine c Einheit umfaßt.

19. Verfahren gemäß Anspruch 18, wobei die a Einheit ein durchschnittliches Blendmolekulargewicht von 4000 bis 4500 Dalton und einen Ethylenoxidanteil von 40 bis 50% aufweist, die b Einheit ein durchschnittliches Blendmolekulargewicht von 1400 bis 1600 Dalton und einen Ethylenoxidanteil von 40 bis 50% aufweist, und die c Einheit ein durchschnittliches Molekulargewicht von 400 bis 600 Dalton und einen Ethylenoxidanteil von 40 bis 50 Prozent aufweist.

20. Verfahren gemäß Ansprüchen 16 oder 17, wobei das grenzflächenaktive Mittel eine a Einheit, eine b Einheit und eine d Einheit umfaßt.

21. Verfahren gemäß Ansprüchen 16 oder 17, wobei das grenzflächenaktive Mittel eine a Einheit, eine c Einheit und eine d Einheit umfaßt.

22. Verfahren gemäß Ansprüchen 16 oder 17, wobei das grenzflächenaktive Mittel eine a Einheit und eine c Einheit umfaßt.

23. Verfahren gemäß Anspruch 22, wobei die a Einheit ein durchschnittliches Blendmolekulargewicht von 4000 bis 4500 Dalton und einen Ethylenoxidanteil von 40 bis 50% aufweist, und die c Einheit ein durchschnittliches Blendmolekulargewicht von 400 bis 600 Dalton und einen Ethylenoxidanteil von 40 bis 50% aufweist.

24. Verfahren gemäß einem der Ansprüche 16-23, wobei das Substrat aus Holz, Papier, Metall, einem Ledermaterial, einem Gewebe, einem Kunststoff, einem Schaum oder einer Kombination von zwei oder mehreren davon ausgewählt ist.

25. Verfahren gemäß einem der Ansprüche 16-23, wobei das Substrat aus einem Polyvinylchloridmaterial ausgewählt ist.

## Revendications

1. Procédé de production d'une plaque de mousse de polyuréthanne laminée à la flamme, comprenant la réaction d'une composition comprenant :

(a) un polyéther-polyol présentant une fonctionnalité allant de 2 à 6 et un poids moléculaire moyen en nombre allant de 1000 à 10000 g/mole ;
(b) un polyisocyanate ;
(c) au moins un catalyseur pour la production d'une mousse de polyuréthanne ;
(d) un additif de lamination à la flamme ;
(e) un additif retardateur de flammes ;
(f) au moins un agent gonflant comprenant de l'eau, et
(g) un tensioactif silicone comprenant un polymère contenant du silicone ayant la formule :

$$MD_xD'_yM$$

où M est $(CH_3)_3SiO_{1/2}$-; D est $-O_{1/2}Si(CH_3)_2O_{1/2}$- ; D' est $-O_{1/2}Si(CH_3)R'O_{1/2}$- ; x est 40 à 150 ; y est 5 à 40 : x/y $\leq$ 7 ; R' est un polyéther à coiffe acétoxy ; et le tensioactif comprend au moins deux unités D' ayant différents polyéthers à coiffe acétoxy , les groupes polyéther à coiffe acétoxy ayant 0 pour cent en mole de ramifications dont la teneur en oxyde d'éthylène est $\geq$ 75% en poids ; le tensioactif ayant un poids moléculaire moyen cible allant de 18000 à 35000 Daltons.

2. Procédé selon la revendication 1, où le tensioactif a un poids moléculaire moyen cible allant de 20000 à 30000 Daltons, de préférence de 22000 à 28000 Daltons.

3. Procédé selon la revendication 1 ou 2, où x/y se situe dans l'intervalle allant de 4 à 7.

4. Procédé selon l'une quelconque des revendications 1 à 3, où le tensioactif comprend trois unités D', chaque unité D' ayant un polyéther à coiffe acétoxy différent avec 0 pour cent en mole de ramifications dont la teneur en oxyde d'éthylène est $\geq$ 75% en poids.

5. Procédé de production d'une plaque de mousse de polyuréthanne laminée à la flamme, comprenant la réaction d'une composition comprenant :

   (a) un polyéther-polyol présentant une fonctionnalité allant de 2 à 6 et un poids moléculaire moyen en nombre allant de 1000 à 10000 g/mole ;
   (b) un polyisocyanate ;
   (c) au moins un catalyseur pour la production d'une mousse de polyuréthanne ;
   (d) un additif de lamination à la flamme ;
   (e) un additif retardateur de flammes ;
   (f) au moins un agent gonflant comprenant de l'eau, et
   (g) un tensioactif silicone comprenant un polymère contenant du silicone ayant la formule :

   $$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

   où $R^1$, $R^2$ et $R^3$ sont des polyéthers de poly(oxyde d'alkylène) de formule:

   $$\text{-}B\text{-}C_nH_{2n}O\text{-}(C_2H_4O)_e\text{-}(C_3H_6O)_f\text{-}(C_4H_8O)_g\text{-}Z,$$

   $R^1$ présente un poids moléculaire moyen du mélange situé dans l'intervalle allant de 3000 à 6000 grammes/mole et la teneur en oxyde d'éthylène constitue 20 à 60% en poids de la teneur en oxyde d'alkylène du polyéther ;
   $R^2$ présente un poids moléculaire moyen du mélange situé dans l'intervalle allant de 800 à 2900 grammes/mole et la teneur en oxyde d'éthylène constitue 20 à 60% en poids de la teneur en oxyde d'alkylène du polyéther ;
   $R^3$ présente un poids moléculaire moyen du mélange situé dans l'intervalle allant de 130 à 800 grammes/mole et la teneur en oxyde d'éthylène constitue 0 à 75% en poids de la teneur en oxyde d'alkylène du polyéther ;
   $R^4$ est un groupe alkyle, alkaryle ou aryle en $C_1$ à $C_{12}$, substitué ou non substitué ;
   B dérive d'un groupement capable de subir une hydrosilation ;
   Z est choisi parmi le groupe consistant en hydrogène, des groupements alkyle ou aralkyle en $C_1$-$C_8$, -$C(O)Z^1$, -$C(O)OZ^1$ et -$C(O)NHZ^1$, où $Z^1$ représente des groupements alkyle ou aralkyle en $C_1$-$C_8$ mono-fonctionnel ;
   chaque R est indépendamment choisi parmi le groupe consistant en $R^1$, $R^2$, $R^3$ et $R^4$ ; x est 40 à 150 ;
   y est 5 à 40 et équivaut à a+b+c+d, où b ou c, mais pas les deux, peut être 0, d/(a+b+c) = 0 à 1 et a+b > 0 ; x/y $\leq$ 7 ; n $\geq$ 4 ; et e, f et g sont définis par le poids moléculaire requis du polyéther.

6. Procédé selon la revendication 5, où x/y est $\leq$ 6.

7. Procédé selon la revendication 5, où x/y se situe dans l'intervalle allant de 3 à 7.

8. Procédé selon la revendication 5, où x/y se situe dans l'intervalle allant de 4 à 7.

9. Procédé selon l'une quelconque des revendications 5 à 8, où le tensioactif comprend une unité a, une unité b et une unité c.

10. Procédé selon la revendication 9, où l'unité a présente un poids moléculaire moyen du mélange allant de 4000 à 4500 Daltons et une teneur en oxyde d'éthylène allant de 40 à 50% ; l'unité b présente un poids moléculaire moyen du mélange allant de 1400 à 1600 Daltons et une teneur en oxyde d'éthylène allant de 40 à 50%, et l'unité c présente un poids moléculaire moyen du mélange allant de 400 à 600 Daltons et une teneur en oxyde d'éthylène allant de 40 à 50%.

11. Procédé selon l'une quelconque des revendications 5 à 8, où le tensioactif comprend une unité a, une unité b et une unité d.

12. Procédé selon l'une quelconque des revendications 5 à 8, où le tensioactif comprend une unité a, une unité c et une unité d.

13. Procédé selon l'une quelconque des revendications 5 à 8, où le tensioactif comprend une unité a et une unité c.

14. Procédé selon la revendication 13, où l'unité a présente un poids moléculaire moyen du mélange allant de 4000 à 4500 Daltons et une teneur en oxyde d'éthylène allant de 40 à 50%, et l'unité c présente un poids moléculaire moyen du mélange allant de 400 à 600 Daltons et une teneur en oxyde d'éthylène allant de 40 à 50%.

15. Procédé selon l'une quelconque des revendications 5 à 14, où le tensioactif est présent dans la composition à une concentration allant de 0,1 à 5 pphp, pphp étant des parties par cent parties de polyol.

16. Procédé de production d'une structure stratifiée ou composite, le procédé comprenant la liaison à chaud d'un substrat sur une mousse de polyuréthanne, où la mousse de polyuréthanne est produite par réaction d'une composition comprenant :

(a) un polyéther-polyol présentant une fonctionnalité allant de 2 à 6 et un poids moléculaire moyen en nombre allant de 1000 à 10000 g/mole ;
(b) un polyisocyanate ;
(c) au moins un catalyseur pour la production d'une mousse de polyuréthanne ;
(d) un additif de lamination à la flamme ;
(e) un additif retardateur de flammes ;
(f) au moins un agent gonflant comprenant de l'eau, et
(g) un tensioactif silicone comprenant un polymère contenant du silicone ayant la formule :

$$R\text{-}Si(CH_3)_2O\text{-}(Si(CH_3)_2O\text{-})_x\text{-}(SiCH_3R^1O\text{-})_a\text{-}(SiCH_3R^2O\text{-})_b\text{-}(SiCH_3R^3O\text{-})_c\text{-}(SiCH_3R^4O\text{-})_d\text{-}Si(CH_3)_2\text{-}R$$

où $R^1$, $R^2$ et $R^3$ sont des polyéthers de poly(oxyde d'alkylène) de formule:

$$\text{-}B\text{-}C_nH_{2n}O\text{-}(C_2H_4O)_e\text{-}(C_3H_6O)_f\text{-}(C_4H_8O)_g\text{-}Z,$$

$R^1$ présente un poids moléculaire moyen du mélange situé dans l'intervalle allant de 3000 à 6000 grammes/mole et la teneur en oxyde d'éthylène constitue 20 à 60% en poids de la teneur en oxyde d'alkylène du polyéther ;
$R^2$ présente un poids moléculaire moyen du mélange situé dans l'intervalle allant de 800 à 2900 grammes/mole et la teneur en oxyde d'éthylène constitue 20 à 60% en poids de la teneur en oxyde d'alkylène du polyéther ;
$R^3$ présente un poids moléculaire moyen du mélange situé dans l'intervalle allant de 130 à 800 grammes/mole et la teneur en oxyde d'éthylène constitue 0 à 75% en poids de la teneur en oxyde d'alkylène du polyéther ;
$R^4$ est un groupe alkyle, alkaryle ou aryle en $C_1$ à $C_{12}$, substitué ou non substitué ;
B dérive d'un groupement capable de subir une hydrosilation ;
Z est choisi parmi le groupe consistant en hydrogène, des groupements alkyle ou aralkyle en $C_1$-$C_8$, $-C(O)Z^1$, $-C(O)OZ^1$ et $-C(O)NHZ^1$, où $Z^1$ représente des groupements alkyle ou aralkyle en $C_1$-$C_8$ mono-fonctionnel ;
chaque R est indépendamment choisi parmi le groupe consistant en $R^1$, $R^2$, $R^3$ et $R^4$ ; x est 40 à 150 ;
y est 5 à 40 et équivaut à a+b+c+d, où b ou c, mais pas les deux, peut être 0, d/(a+b+c) = 0 à 1, et a+b > 0 ; x/y ≤ 7 ; n ≥ 4 ; et e, f et g sont définis par le poids moléculaire requis du polyéther.

17. Procédé selon la revendication 16, où x/y se situe dans l'intervalle allant de 4 à 7.

18. Procédé selon la revendication 16 ou 17, où le tensioactif comprend une unité a, une unité b et une unité c.

**19.** Procédé selon la revendication 18, où l'unité a présente un poids moléculaire moyen du mélange allant de 4000 à 4500 Daltons et une teneur en oxyde d'éthylène allant de 40 à 50% ; l'unité b présente un poids moléculaire moyen du mélange allant de 1400 à 1600 Daltons et une teneur en oxyde d'éthylène allant de 40 à 50%, et l'unité c présente un poids moléculaire moyen du mélange allant de 400 à 600 Daltons et une teneur en oxyde d'éthylène allant de 40 à 50%.

**20.** Procédé selon la revendication 16 ou 17, où le tensioactif comprend une unité a, une unité b et une unité d.

**21.** Procédé selon la revendication 16 ou 17, où le tensioactif comprend une unité a, une unité c et une unité d.

**22.** Procédé selon la revendication 16 ou 17, où le tensioactif comprend une unité a et une unité c.

**23.** Procédé selon la revendication 22, où l'unité a présente un poids moléculaire moyen du mélange allant de 4000 à 4500 Daltons et une teneur en oxyde d'éthylène allant de 40 à 50%, et l'unité c présente un poids moléculaire moyen du mélange allant de 400 à 600 Daltons et une teneur en oxyde d'éthylène allant de 40 à 50%.

**24.** Procédé selon l'une quelconque des revendications 16 à 23, où le substrat est choisi parmi du bois, du papier, du métal, un matériau en cuir, un tissu, une matière plastique, une mousse ou une combinaison de deux ou plusieurs de ceux-ci.

**25.** Procédé selon l'une quelconque des revendications 16 à 23, où le substrat est choisi parmi un matériau en poly(chlorure de vinyle).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510171297
- US 20020098338
- US 8535476 A
- EP 025549 A
- US 4306037 A
- US 5891928 A
- US 5900087 A
- EP 035687 A
- US 4371630 A